# EUROPEAN PATENT APPLICATION

(11) **EP 3 936 927 A1**
(43) Date of publication of application: **12.01.2022**
(21) Application number: 20315344.0
(22) Date of filing: 08.07.2020
(51) Int. Cl.: G02C 7/10, G02C 7/12

(54) **METHOD FOR TINTING AN OPHTALMIC ARTICLE AND RELATED OPHTALMIC ARTICLE**

(71) Applicant: ESSILOR ITALIA SPA, 43121 Parma (IT)
(72) Inventor: Lagasi, Matteo, 43121 Parma (IT)
(74) Representative: Croonenbroek, Thomas Jakob

(57) **Abstract**

The invention relates to a method for tinting at least partially an ophthalmic article comprising at least one of each of the following steps of :
- application (300) of a temporary mask pattern on the ophthalmic article, the temporary mask pattern being a surface coat of a material withstanding dye bathing during tinting process,
- surface tinting (302) the ophthalmic article in a dye bath,
- removing (304) the temporary mask pattern.

## Description

The present invention relates to a method for tinting at least partially an ophthalmic article and a related ophthalmic article.

The term "ophthalmic article" is specifically understood to mean a lens, corrective or otherwise, that can be used as spectacle glass, for spectacles for example, particularly sunglasses, goggles, visors or the like.

Eye- or sunglasses do not only have medical functions, in particular to protect the eye, to ease vision or to correct the vision of the wearer, but they are also used as "fashion item" and personalization is an important topic in this context.

Concerning the spectacle frames generally made of a plastic material or in part of metal, many decoration techniques are known and used for personalization and for transformation of the spectacle lenses into a fashion object.

However, concerning the lenses, decoration effects are much more limited and there are fewer techniques for decoration at hand, in particular techniques which are easy to implement, offer a wide range of decoration possibilities and at limited supplemental cost.

Today, decoration of the lenses often consists in applying for example an interference filter on the lenses to get a mirror effect or in tinting uniformly, or with a gradient, a substrate of the lens in adding a dye or specific pigments in the substrate material.

With these techniques, it's difficult to get some "fancy" fashion effects.

The present invention therefore aims to propose a method for tinting an ophthalmic article that offers a large spectrum of possibilities for decoration at contained cost and manufacture facilities on an industrial level.

With this aim, the invention proposes a method for tinting at least partially an ophthalmic article comprising the following steps of :
- application of a temporary mask pattern on the ophthalmic article, the mask pattern being a surface coat of a material withstanding dye bathing during tinting process,
- surface tinting the ophthalmic article in a dye bath,
- removing the temporary mask.

It is thus possible to obtain surface tinting allowing a variety of decorative effects.
The method may comprise one or several of the followings aspects takeln alone or in combination:
The application of the temporary mask pattern comprises for example pad printing, silk screening, or digital plotting.

The surface coat may be a strippable surface coat.

The surface coat can comprise an adhesive.

The dye bath comprises for example an acid water bath at a temperature between 50°C and 95°C.

The ophthalmic article may comprise a nylon or a polycarbonate substrate with a tintable hard coat.

The mask pattern comprises for example holes defining the zones to be tinted in the dye bath.

The zones to be tinted in the dye bath may be located outside the central vision zone of the ophthalmic article.

The invention also relates to an ophthalmic article manufactured according a method as defined above.

The ophthalmic article may comprise a polarization layer and/ or a layer of tinted plastic material, and / or an interferential mirror layer.

Other advantages and features will become apparent upon reading the description of the following figures, among which:
- figure 1 shows an example of a schematic cross section view of an ophthalmic article intended to be tinted / decorated,
- figure 2 is an exploded view of the layers of figure 1,
- figure 3 shows an example of a schematic cross section view of an ophthalmic article intended to be tinted / decorated,
- figure 4 shows an example of a flow-chart of the method for tinting at least partially an ophthalmic article,
- figure 5 shows an example of a top view of the ophthalmic article after a possible first process step,
- figure 6 shows a synoptic view of an ophthalmic article during another process step,
- figure 7 shows an example of a decorated ophthalmic article obtained with the described method,
- figure 8 shows another example of a decorated ophthalmic article obtained with the described method, and
- figure 9 shows a further example of a decorated ophthalmic article obtained with the described method, and

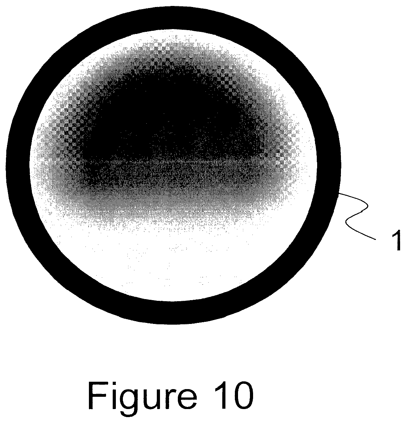

- figure 10 shows a further example of a decorated ophthalmic article obtained with the described method.

On all the figures, the same elements bear the same reference numbers.

The following embodiments are only examples. Although the description refers to one or several embodiments, the invention is not limited to theses embodiments. In addition, a feature described in relationship with one embodiment may also concern another embodiment even if this is not mentioned expressively. Simple features of different embodiments may also be combined to provide further realizations.

In the present description, by "front" or "back" face of a layer, reference is made to the propagation of the rays of light towards the eye through the ophthalmic lens when an ophthalmic device bearing the ophthalmic lens is worn on a wearer's face. Thus a "front" face is always that which is directed toward the user's field of view and a "rear" face is always that which is closest to the eye of the user.

By "upstream" or "downstream" of two elements or layers, one refers to the propagation of the rays of light towards the eye in the same system as presented above. Thus, a first element is disposed upstream of a second element when the light passes through its path towards the eye of the user first through the first element and then through the second element. Conversely, a first element is disposed "downstream" of a second element when the light passes through its path towards the eye of the user first through the second element and then through the first element.

The terms "crystal" or "crystal glass" are understood to mean a glass/optical material of the class 0 according to the standardized international definition of glasses into five categories of light transmission. It is a glass having in the visible spectrum a light transmission comprised between 80% and 100%.

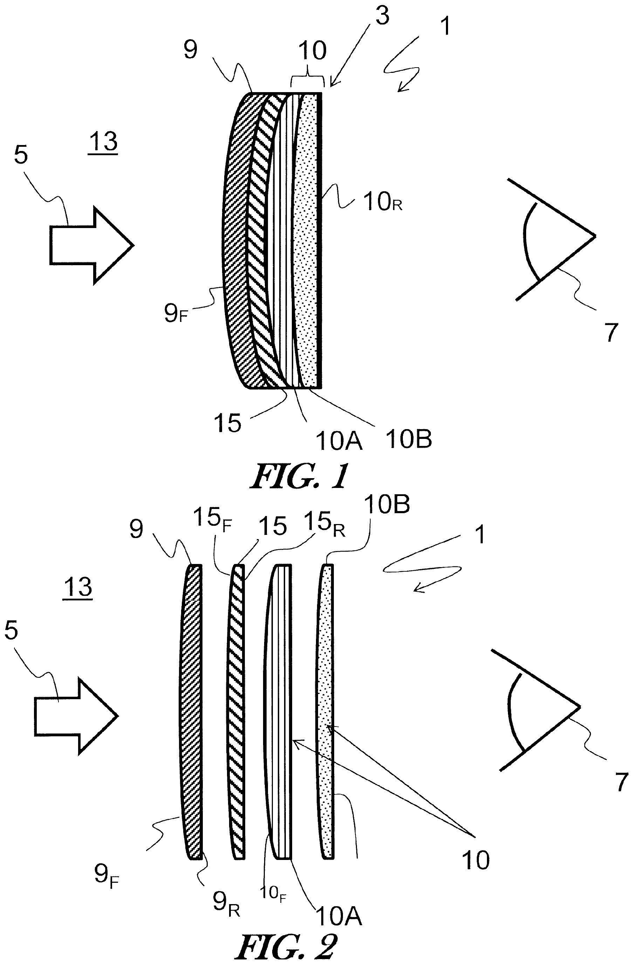

The ophthalmic article 1 of FIGS. 1 and 2 is for example intended to be used for spectacles, in particular sunglasses. To do this, it is only necessary to shape the outer edge 3 according to the desired shape of the frame of the eyeglasses or sunglasses. Alternatively, and within the scope of the disclosure, the ophthalmic article may be intended for goggles, vision visors or the like.

In FIGS. 1 and 2, the light incident on the ophthalmic article 1 and an eye 7 representing a user are shown by the arrow 5. The field of view 13 is thus situated on the side of the arrow 5 and the user looks through the ophthalmic article 1 with his eye 7.

By ophthalmic article 1 is meant a corrective lens or not, finished or semifinished, suitable for being mounted in a frame, for example a spectacle frame, goggles, a mask or a visor intended to be placed in front of the eyes and forming a screen of visual protection.

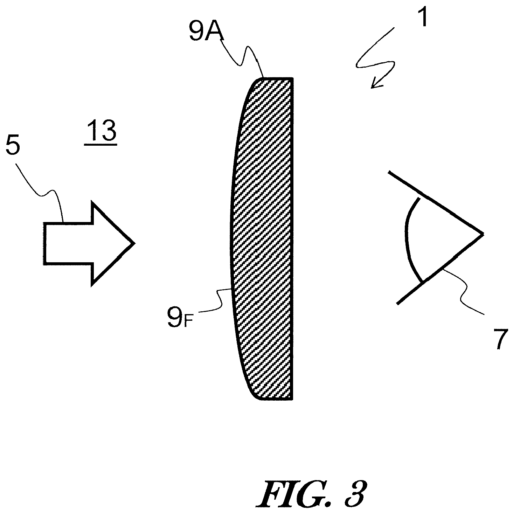

The ophthalmic article 1 comprises at least one layer or substrate 9A (see for example figure 3).

As to the example shown in figures 1 and 2 the ophthalmic article 1 comprises at least two layers, a first layer 9 (front layer) and a second layer 10 (rear layer). One or several third layer(s) 15 may be sandwiched between the first layer 9 and the second layer 10.

In this context, treatments conferring additional functions, either alone or in combination among the following non-exhaustive list: shockproof, anti-scratch, anti-abrasion, anti-reflective, anti-fouling, anti-fogging, anti-static are not considered as additional layers. These additional functions can be carried out according to conventional methods (soaking, vacuum deposition, spin coating, spray coating, etc.).

The first layer 9 is for example made of a plastic material, thermoset or thermoplastic plastic material, in particular made of polyamide (PA), like nylon or a polycarbonate.

The first layer has a rear face 9R to be oriented toward the eye 7 of the user and a front face 9F to be oriented toward the field of vision 13 of the user. The first layer 9 has a for example a thickness comprised between 0.05mm and 1mm and even 5mm, preferentially comprised between 0.1mm and 0.8 mm, preferentially between 0.15 mm and 0.5mm, for example 0.18mm.

In particular the front face 9F shall be decorated via the method outset in this application.

The second layer 10 is for example also made of a plastic material, thermoset or thermoplastic plastic material, in particular made of polyamide (PA), like nylon or a polycarbonate.

The second layer 10 has a rear face 10R to be oriented toward the eye 7 of a user and a front face 10F to be oriented toward the field of vision 13 of the user. The second layer 10 has for example a thickness comprised between 0.05mm and 1 mm or even 6mm, preferentially comprised between 0.05mm and 0.8 mm, preferentially between 0.1 mm and 0.5mm, for example 0.15mm. In that case, the ophthalmic article may be an optical film, dedicated to be applied onto or into a lens. Alternatively the second layer 10 has for example a thickness comprised between 0.5 mm and 5 mm, preferentially comprised between 1 mm and 4 mm, most preferably between 1.4 mm and 4 mm or even between 1.5 mm and 3 mm. In that case, the ophthalmic article may be an ophthalmic lens.

However, other thicknesses for layers 9 and 10 can be chosen in function for example of the optical correction of the ophthalmic article 1. In particular, if an optical correction is desired, one of the layers 9 and 10 may have a non-uniform thickness, so that its front face has a different curvature than its rear face.

As can be seen in figures 1 and 2, the first layer 9 is disposed proximate to the field of vision 13 of the user with regard to the second layer 10 that is disposed proximate to the eye 7 of the user.

Optional third layer 15 is made of a polarizing layer, in particular linearly polarizing polyvinyl alcohol which is disposed between the first layer 9 and the second layer 10. The third layer 15 may have a thickness comprised between 0.01mm and 1mm preferentially comprised between 0.02mm and 0.2 mm, for example 0.05mm or 0.07 mm.

Optional third layer 15 may also be a filter layer, for example to filter a specific wavelengths or wavelength ranges or according to a prescribed spectrum in order to fulfill the requirement of a standard, for example international standard ISO 12312 concerning eye protection and in particular sunglasses.

The filtering function may be carried out via an interference filter / mirror made of a stack of thin layers with alternating refractive indexes, like for example SiO2 or Ti3O5. Other materials known to the person skilled in the art may be used in place, such as ITO, Ta2O5, ZrO2, etc.

The third layer 15 has a rear face 15R to be oriented toward the eye 7 of a user and a front face 15F to be oriented toward the field of vision 13 of the user.

When assembled, for example through thermoforming or injection molding, the rear face 9R of the first layer 9 is in contact with the front face 15F of the third layer 15 and the rear face 15R of the third layer 15 is in contact with the front face 10F of the second layer 10.

As shown in the figures, the second layer 10 may comprise a first sublayer 10A made of polyamide and a second sublayer 10B made of polyamide and disposed downstream the first sublayer. The second sublayer 10B has for example a thickness comprised between 0.5 mm and 5 mm, preferentially comprised between 1 mm and 4 mm, most preferably between 1.4 mm and 4 mm or even between 1.5 mm and 3 mm.

One of said first 10A or second 10B sublayers, for example the first sublayer 10A is tinted by addition of a pigment or a colorant, whereas the other sublayer, in particular sublayer 10B which is to be closest to the eye of the user, is a non-tinted crystal sublayer. In this case, the pigment or colorant is chosen to filter out part of the incident light spectrum. Alternatively, the second layer does not comprise two sublayers and is either fully crystal clear or fully tinted, in the thickness direction. In such case second layer 10 may only comprise the second sublayer 10B without the first sublayer 10A.

This arrangement is interesting in case where for example the third layer 15 is only a polarizing layer and first sublayer 10A is then configured as a filter layer, for example to filter a specific wavelengths or wavelength ranges or according to a prescribed spectrum in order to fulfill the requirement of a standard, for example international standard ISO 12312 concerning eye protection and in particular sunglasses.

In this case the rear face 10R of the second layer 10 may be surface finished for a corrective effect.

However, in a non-illustrated alternative, second layer 10 may also be made of only one single layer, for example of non-tinted, crystal plastic material. In such case second layer 10 may only comprise the second sublayer 10B without the first sublayer 10A.

As a further alternative illustrated in figure 3, the ophthalmic article may not comprise either of the second layer 10 and the optional third layer 15. The ophthalmic article 1 of said alternative is thus comprised mainly of the first layer 9 which is thus considered a substrate 9A.
The substrate 9A has a for example a thickness comprised between 0.5 mm and 5 mm, preferentially comprised between 1 mm and 4 mm, most preferably between 1.4 mm and 4 mm or even between 1.5 mm and 3 mm.

The disclosure described in relation to layer 9, second layer 10 or second sublayer 10B may apply mutatis mutandis to substrate 9A. In this embodiment the ophthalmic article is in particular a piano lens. In another embodiment, the rear face 9R of the substrate 9A may be surface finished for a corrective effect.

The substrate 9A is for example made of a plastic material, thermoset or thermoplastic plastic material, in particular made of polyamide (PA), like nylon or a polycarbonate. Substrate 9A may be crystal clear, tinted or partially tinted.

In this context, treatments conferring additional function may also be applied.

In particular the front face 9F shall be decorated via the method outset in this application.

Further, the following disclosure may apply mutatis mutandis to the embodiments of figures 1, 2 or 3.

A tintable hard coat treatment, not illustrated, may be applied on the front face 9F of the first layer 9.

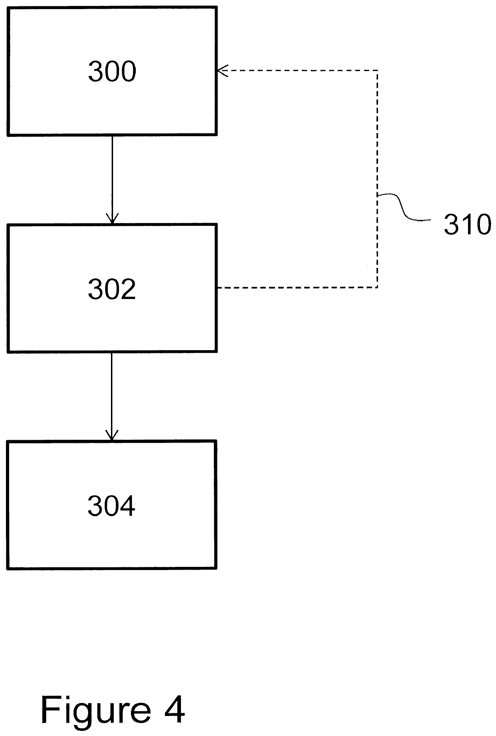

Turning to figure 4 showing an example of an embodiment of a method for tinting at least partially ophthalmic article 1.

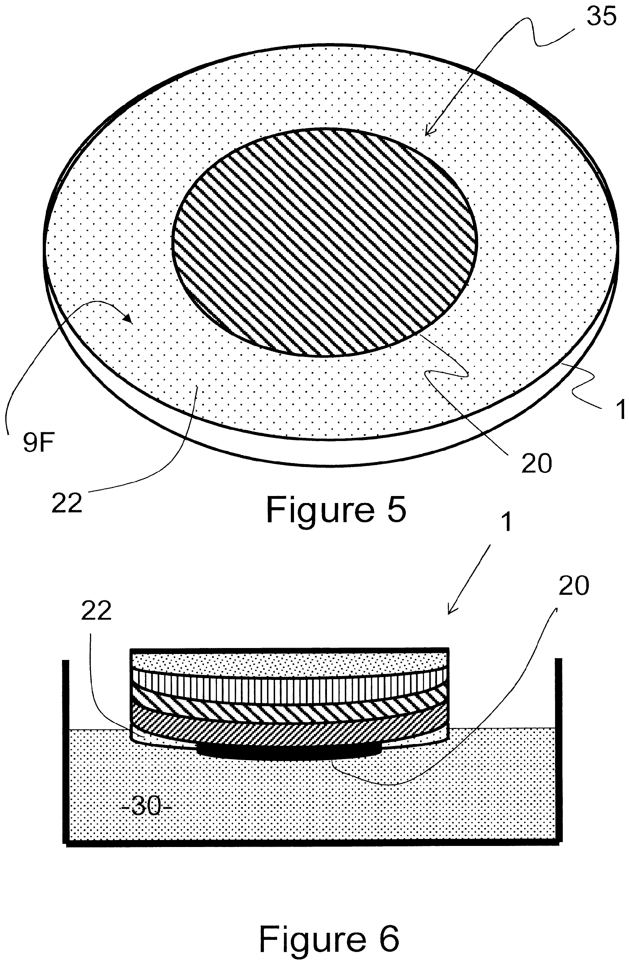

In a first step 300, temporary mask pattern 20 and 22, as shown in figure 5, are for example applied on the front face 9F of the first layer 9 of the ophthalmic article 1 or the tintable hard coat treatment disposed on the front face 9F. The zone covered by temporary mask pattern 20 is not to be decorated.

In general, the zones to be tinted are located outside the central vision zone 35 of the ophthalmic article 1. The central vison zone is defined as a circular or elliptic zone of about 20mm around the center axis of the ophthalmic article 1.

The temporary mask pattern 20 and 22 are made of a surface coat of a material withstanding dye bathing during tinting process.

The surface coat may be made of an epoxy or alkylic coating that may be removable via a solvent and/or ultrasound wash.

Outside the temporary mask pattern 20, the temporary mask pattern 22 comprises for example dots of the above mentioned surface coat withstanding dye bathing during tinting process, but any other forms can be considered. All parts of the annular from around the central vision zone 35, which are uncovered, laid bare, are to be tinted.

By tinting the front face 9F with dots of the surface coat forming the mask pattern 22, during the tinting step described below a pattern with untinted dots may thus be obtained.

In other examples, the mask pattern 22 comprises, in particular outside the central vision zone 35, holes or fences, straight or curbed, defining the zones to be tinted.

Different techniques may be used to apply the mask pattern 20 and 22 like pad printing, silk screening or digital plotting, or localized etching. Mask pattern 20 and 22 may be applied simultaneously on the whole front face 9F, but for special effects, application can be realized one after another.

This allows a great variety of pattern to be realized and many decorative, in particular "fancy" effects.

The mask pattern 20 or 22 may also be a surface coat realized as a strippable surface coat or it may comprise an adhesive. A surface coat may be considered as strippable if it is possible to remove it with a solvent or an appropriate washing process.

In a further step 302 shown in figure 5, the ophthalmic article 1 with mask pattern 20 and 22 is dipped in a dye bath 30 for surface tinting the uncovered parts of front face 9F or of the tintable hard coat.

The dye bath 30 comprises for example an acid water bath at a temperature between 50°C and 95°C.

In function of the composition of the dye bath and the duration, various decoration effects can be obtained.

Step 302 may comprise substeps, in the sense that the ophthalmic article 1 with mask pattern 20 and 22 is dipped in several different dye baths 30, one after another, for surface tinting of front face 9F or tintable hard coat.

According to another embodiment shown with a hashed arrow 310, the method may also comprises the possibility to go back to step 300 in order to apply a further mask pattern 22 on an already tinted zone during a first tinting step, and then further tinting in a supplemental step 302 the now uncovered zone by the further mask 22 by dipping in another different dye baths 30. Thus, multiple mask patterns are used on a same lens in-between the different dye baths, allowing for different colors, or different intensity of tint.

One may also consider two mask patterns 22 for outside the central vision zone 35, where one is the positive and the other the correspondent negative complementary pattern.

In this case in a fist sub-step 302, zones that are uncovered by the positive mask pattern 22 are tinted in a first color by dipping in first dye bath 30.

Then one removes the positive mask pattern 22 and replaces it with the complementary negative mask pattern 22. Zones that are uncovered by the negative mask pattern 22 are now tinted in a second color by dipping in second dye bath 30. The negative mask pattern however protects and covers the zones tinted during the first dye bath. In this case, zones that were tinted in a first color by dipping in first dye bath 30 are protected during the second tinting step. With this embodiment of the method, one may achieve a two color decoration pattern.

This method can be enlarged to be similar to a pixel printing process with for example with three primary colors like magenta, yellow and cyan, allowing decorating the ophthalmic article 1 with images or other very sophisticated decorations.

In a further possible embodiment, part of a zone tinted with a first color during a first dye bath may be uncovered by any mask pattern during the tinting during a second dye bath with a second color, resulting in a color mixing the colors of both dye baths.

In a last step 304, temporary mask patterns 20 and mask pattern 22 are removed, for example with a solvent or during a washing process.

A possible result is shown in figure 6, where the ophthalmic article 1 is not tinted in the central vision zone 35 and shows a decorative effect 37 obtained through the tinting step(s) outside the central vision zone 35.

In the above described example, only the front face 9F received the temporary mask 20 and the ophthalmic article 1 was only partially dipped into the dye bath 30.

In a further embodiment, the rear face of the ophthalmic article, here the rear face 10R of the second layer 10, may be fully, or partially covered with a temporary mask pattern 20. In this case, the ophthalmic article 1 may be fully dipped into the dye bath 30.

In case the rear face 10R of the second layer 10 is fully covered by a temporary mask 20, the rear face 10R will not be tinted. In case the rear face 10R of the second layer 10 is partially covered, in particular in a central vision zone 35 by a temporary mask 20, the rear face 10R will be tinted in the uncovered zones.

In particular the partial tinting of the rear face 10R may allow enhancing higher color contrast effects with regard to the front face 9F.

In a further development rear face 10R may be let uncovered and front face 9F received a partial temporary mask 20 and the ophthalmic article 1 is fully dipped into the dye bath 30.

In this case, the rear face 10R will be tinted whereas the front face 9F is only partially tinted as described above.

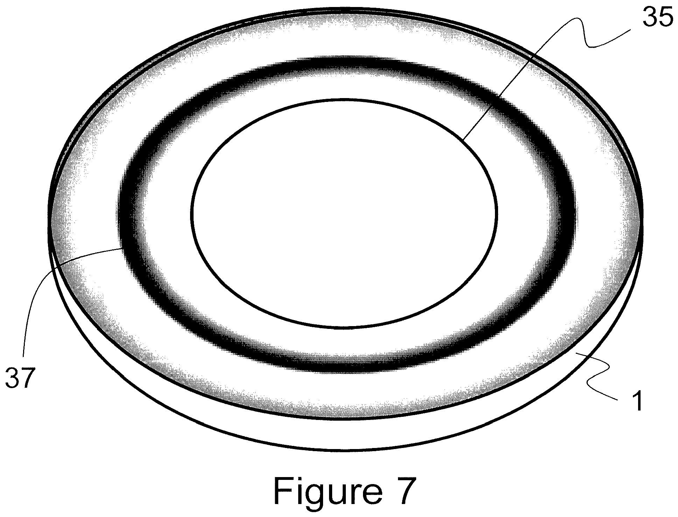

Figure 7 shows another example of a decorated ophthalmic article obtained with the described method. In this case the temporary mask pattern 20 is covering totally the center vision zone 35, and then progressively, the temporary mask pattern 22 outside the center vison zone uncovers the front face 9F to be tinted.

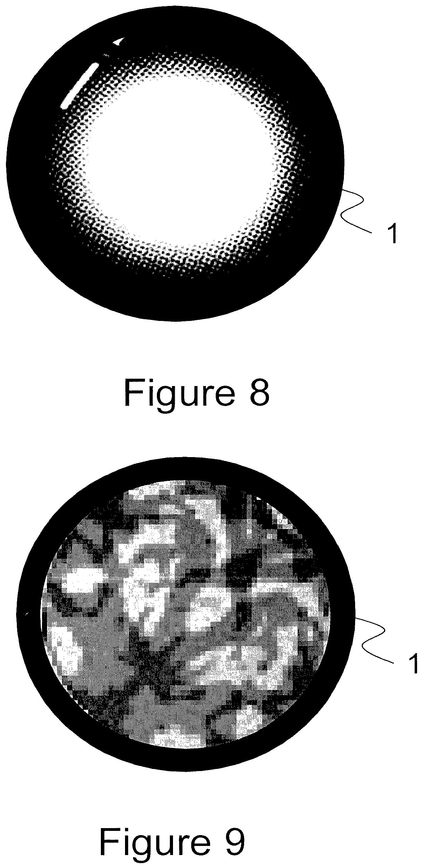

Figure 8 shows a further example of a decorated ophthalmic article obtained with the described method. In this case, the center vision zone 35 is also tinted. Figure 8 is an example where in a fist sub-step 302, zones that are uncovered by a first temporary mask pattern 20 are tinted in a first color by dipping in first dye bath 30, then one removes the first temporary mask pattern 20 and replaces it with a second temporary mask pattern 20, which is different form the first temporary mask pattern 20.

In this case, zones that were only uncovered by the first temporary mask pattern 20 during the dipping in the first dye bath are tinted in a first color. Zones that were only uncovered by the second temporary mask pattern 20 during the dipping in the second dye bath are tinted in a second color. And zones that were uncovered during the dipping in the first dye bath and in the second dye bath are tinted in a third color. This third color can be a mix of the first and second color of respectively the first and the second dye bath.

In case the first dye bath and the second dye bath are the same, but the temporary mask pattern 20 for the first and the second dye bath are different, in particular there are zones that are tinted twice, one can obtain for example a darker tint, or an enhanced contrast.

A similar effect can be achieved if both faces are simultaneously tinted, one pattern being on the front face and one pattern on the rear face.

Figure 9 shows a further example of a decorated ophthalmic article obtained with the described method. In this case too, the center vision zone 35 is also tinted. Figure 9 shows that a progressive halo effect in two colors may also be obtained.

Consequently the method described here above offers a very large spectrum of possibilities for decoration at contained cost and is easy to manufacture on an industrial level.

## Claims

1. Method for tinting at least partially an ophthalmic article (1) comprising at least one of each of the following steps of :
- application (300) of a temporary mask pattern (20, 22) on the ophthalmic article (1), the temporary mask pattern (20, 22) being a surface coat of a material withstanding dye bathing during tinting process,
- surface tinting (302) the ophthalmic article in a dye bath (30),
- removing (304) the temporary mask pattern (20, 22).

2. Method according to claim 1, where the application of the temporary mask pattern (20, 22) comprises pad printing.

3. Method according to claim 1, where the application of the temporary mask pattern (20, 22) comprises silk screening.

4. Method according to claim 1, where the application of the temporary mask pattern (20, 22) comprises digital plotting.

5. Method according any of claims 1 to 4, where the surface coat is a strippable surface coat.

6. Method according any of claims 1 to 5, where the surface coat is comprises an adhesive.

7. Method according to any preceding claim, where the dye bath (30) comprises an acid water bath at a temperature between 50°C and 95°C.

8. Method according to any preceding claim where the ophthalmic article comprises a nylon or a polycarbonate substrate with a tintable hard coat.

9. Method according to any preceding claim, where the mask pattern comprises holes defining the zones to be tinted in the dye bath (30).

10. Method according to claim 9, where the zones to be tinted in the dye bath (30) are located outsides the central vision zone (35) of the ophthalmic article (1).

11. Ophthalmic article (1) manufactured according a method as claimed in any of claims 1 - 10.

12. Ophthalmic article according to claim 11, comprising a polarization layer (15).

13. Ophthalmic article according to claim 11 or 12, comprising a layer of tinted plastic material (10A).

14. Ophthalmic article according to any of claims 11 to 13, comprising an interferential mirror layer.
